# EUROPEAN PATENT SPECIFICATION

(11) **EP 1 075 365 B1**
(45) Date of publication and mention of the grant of the patent: **20.11.2002**
(21) Application number: 99914662.4
(22) Date of filing: 06.04.1999
(51) Int. Cl.: B27G 1/00, B44C 5/04, B23B 51/04

(54) **METHOD AND APPARATUS FOR REPAIRING AND/OR DECORATING FURNITURE**
VERFAHREN UND VORRICHTUNG ZUM REPARIEREN UND/ODER DEKORIEREN VON MÖBELN
PROCEDE ET DISPOSITIF DE REPARATION ET/OU DE DECORATION DE MOBILIER

(30) Priority: 07.04.1998 GB 9807345
(43) Date of publication of application: 14.02.2001
(73) Proprietor: Titman Tip Tools Ltd, Clacton-on-Sea, Essex CO15 4AB (GB)
(72) Inventor: TITMAN, Malcolm, John, Clacton on Sea, Essex CO15 6LA (GB)
(74) Representative: Allsop, John Rowland
(86) International application number: GB9901037
(87) International publication number: WO99051408

(56) References cited:
- CH-A- 668 384
- DE-A- 2 028 452
- DE-A- 3 403 632
- US-A- 5 624 213

## Description

### FIELD OF THE INVENTION

The present invention relates to furniture and particularly to the inlay treatment of furniture such as kitchen and bedroom furniture which may result from the need to customise the furniture or as a means of effecting repairs.

### BACKGROUND OF THE INVENTION

Various materials are used to construct furniture of the type mentioned above. One such material is Corian™ which can be glued together to flat even surfaces such that no glue line is evident. This feature allows the product to be repaired at relatively low cost.

Corian™ is resistant to many chemicals and household fluids. The surface finish is similar to marble and is made in many decorative colours of one or a mixed colour type.

Most damage to surfaces of this type occurs through extreme heat. Cigarette burns are an example of this, or physical gouging with a sharp object

A method for the repair of Corian™ and other similar materials is presently in use, and devised by the present inventors, which employs an extremely accurate cutter system of a two-part construction for use mainly with a router machine or motorised drill type machine.

In this method of repair a tapered hole is drilled into the surface at the point of damage thereto into which is fitted a tapered plug produced using a second matching tool.

The repair plug is cut from a small section of the material of the primary surface such as Corian™.

The tapered plug is made to match the tapered hole in the primary surface. The outside diameter and angles of the plug produced are relatively unimportant provided that the repair plug used fits into the hole correctly, although it is preferable to have a minimal gap at the small end of the tapered hole to ensure a strong overall joint.

Normally the tapered hole dimensions are controlled by using a depth stop on the powered router machine so that the plug fits slightly over-flush or if in a blind hole the required dimensions are made over-flush to avoid bottoming in the hole, but in both cases to ensure contact on the visible face.

The protruding amount of the plug is then trimmed off and merged into the primary surface such that no glue line can be seen by the naked eye and the mend is invisible.

The same system may be used to give a decorative effect with circular plugs of differing size colour or pattern to the customer's choice. Different sized circular plugs are easily produced.

### SUMMARY OF THE INVENTION

The above described prior art system produces decorative effects and / or repairs using a single plug, the plug being the same colour as the surface to be repaired or of a different colour for decorative effect as desired.

The system however has distinct limitations since it does not provide the facility for producing a wide variety of decorative surfaces either as a result of the need to repair a primary surface or build up a primary surface from scratch with customised decoration upon it.

According to one aspect of the invention there is provided a method of treating a work surface such as a kitchen worktop to repair and / or decorate the same, comprising boring a hole in the work surface at the place to be treated, forming a first plug from the same or other material as the worktop substantially to the size and dimensions of the hole in the work surface, fitting the first plug in the hole in the workpiece to effect a matching fit, boring a hole in the first plug smaller than the hole in the work surface, forming a second plug from the same or other material as the worktop substantially to the size and dimensions of the hole in the first plug, fitting the second plug in the hole in the first plug and repeating the last step in relation to a third and succeeding plugs until a last plug is formed necessary to complete the filling of the first formed hole in the work surface with a multiplicity of plugs divided by land surface areas thereby to complete the repair and / or form the decorative effect desired.

Preferably centrally formed guide bores are provided in the plugs during formation thereof for use when boring the holes in the plugs to receive smaller plugs therein.

Advantageously the first, second and succeeding holes and plug fillers are tapered with circular cross-sections so as to produce a series of concentric circles on the work surface.

To produce an added decorative effect the plugs may be of differing colours and / or patterns.

According to another aspect of the invention there is provided apparatus for treating a work surface such as a kitchen worktop to repair and / or decorate the same comprising a plurality of first and second matching cutter sets respectively adapted to bore successfully smaller holes and matching plugs therefor in a workpiece thereby to plug a hole in the worktop formed by the first cutter member of the larger of the cutter sets until the repair and / or decorative effective is complete.

Preferably the second cutter member in each cutter set is provided with a drill for forming guide bores in the matching plugs formed thereby, the first cutter member in each cutter set having guide pins for engaging the guide bores in the matching plugs to bore holes therein for filling with successively smaller matching plugs formed by the second cutter members.

Other features and advantages will become apparent from the following description of the preferred embodiment of the invention taken with reference to the accompanying drawings.

### BRIEF DESCRIPTION OF THE DRAWINGS

In the drawings:
Fig 1 is a side view of several sets of cutting tools for boring holes in a worktop surface and plugs to fill the holes in accordance with the invention, and
Fig 2 is one example of a decorative effect that may be produced using the cutter sets of Fig 1.

### PREFERRED EMBODIMENTS OF THE INVENTION

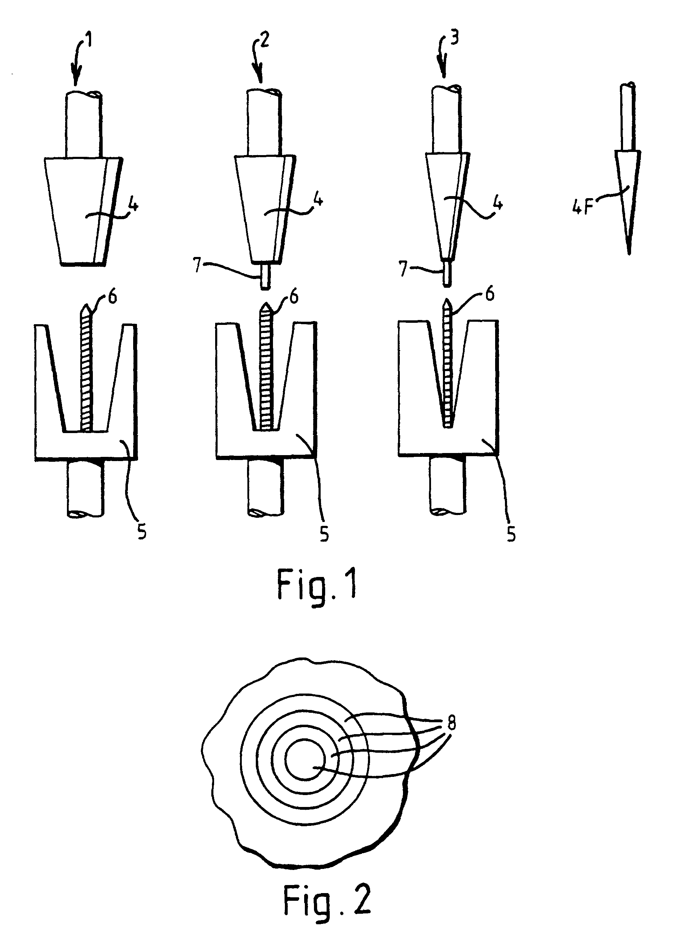

There is shown in Fig 1 several sets of cutting tools 1, 2, 3 for producing treating a worktop surface in accordance with the present invention, either to repair the surface and / or provide a decorative effect thereon.

Each cutter set 1, 2, 3 comprises first and second boring cutter parts 4, 5 which may be operated by a router machine, hand or automatically operated, which is not shown in the drawings.

The boring cutter parts 4 are capable of boring tapered holes in the worktop surface to be treated and the boring cutter parts 5 matching plugs of the same or similar material as that of the worktop surface, for those tapered holes.

The boring cutter parts 4 and 5 in each set 1, 2, 3 are designed respectively to produce holes and plugs of progressively smaller dimensions.

The boring cutter part 5 of each of the cutter sets 1, 2, 3 is provided with an axially positioned drill 6, removable or fixed, so that axial holes are formed in the plugs formed by the boring cutter parts 5 during a cutting sequence.

The boring cutter part 4 of each cutter set 1, 2, 3 is provided with a removable or fixed guide pin 7 along its central axis for engaging the axial holes in the plugs for the purpose as will be described below.

The cutter sets 1, 2, 3 as described are capable for example of producing a decorative effect in a worktop surface such as a kitchen or bedroom worktop, as illustrated in Fig 2 as follows.

A tapered hole is first bored in a worktop surface to be repaired and / or decorated using the largest boring cutter part 4 of the sets 1, 2, 3 which in the illustration shown is the cutter set 1.

A plug (not shown) with a centrally aligned borehole is then produced from a workpiece of the same or similar material as the worktop, using the boring cutter part 5 with its drill 6 of the cutter set 1. The thus formed plug is then fitted into the hole produced by the first cutter part 4 of the cutter set 1.

The cutter part 4 of the cutter set 2 shown in Fig 1 capable of boring a tapered hole smaller than the cutter part 4 of the cutter set 1 is then used to bore a tapered hole in the in situ plug formed by the cutter part 5 of the first cutter set 1. This is achieved by first engaging the guide pin 7 of the cutter part 4 of the cutter set 2 in the guide hole formed in the in situ plug.

The second matching plug thus formed, again with a central guide hole, is then fixed in the tapered hole formed by the cutter part 4 of the cutter set 2.

This sequence of events is repeated until a final plug 4F of a desired size and which has no guide hole, is to be inserted to complete the repair and / or decorative effect which, in the case of the example described above, will be a series of concentric circles as shown in Fig 2 separated by lands 8 which may of different colours if different coloured workpieces from which the plugs are formed are used.

## Claims

1. A method of treating a work surface such as a kitchen worktop to repair and / or decorate the same, comprising boring a hole in the work surface at the place to be treated, forming a first plug from the same or other material as the worktop substantially to the size and dimensions of the hole in the work surface, fitting the first plug in the hole in the workpiece to effect a matching fit, boring a hole in the first plug smaller than the hole in the work surface, forming a second plug from the same or other material as the worktop substantially to the size and dimensions of the hole in the first plug, fitting the second plug in the hole in the first plug and repeating the last step in relation to a third and succeeding plugs until a last plug is formed necessary to complete the filling of the first formed hole in the work surface with a multiplicity of plugs divided by land surface areas thereby to complete the repair and / or form the decorative effect desired.

2. A method as claimed in claim 1 wherein centrally formed guide bores are provided in the plugs during formation thereof for use when boring said holes in the plugs to receive smaller plugs therein.

3. A method of decorating a work surface as claimed in claims 1 or 2 wherein the first, second and succeeding holes and plug fillers are tapered with circular cross sections so as to produce a series of concentric circles on the work surface.

4. A method of decorating a work surface as claimed in any preceding claim wherein the plug fillers have different colours.

5. Apparatus for treating a work surface such as a kitchen worktop to repair and / or decorate the same comprising a plurality of first and second matching cutter sets respectively adapted to bore successfully smaller holes and matching plugs therefor in a workpiece thereby to plug a hole in the worktop formed by the first cutter member of the larger of the cutter sets until the repair and / or decorative effect is complete.

6. Apparatus as claimed in claim 5 wherein the second cutter member in each cutter set is provided with a drill for forming guide holes in the matching plugs formed thereby. the first cutter member in each cutter set having guide pins for engaging the guide holes in the matching plugs to bore holes therein for filling with successively smaller matching plugs formed by the second cutter members

7. Apparatus as claimed in claim 6 wherein the guide pins on the first cutter parts and the drills on the second cutter parts are removable.

## Patentansprüche

1. Verfahren zum Behandeln einer Arbeitsfläche, z.B. einer Küchen-Arbeitsfläche, die repariert und/oder dekoriert werden soll, bei dem ein Loch in die Arbeitsfläche an der zu behandelnden Stelle gebohrt wird, ein erster Stöpsel aus dem gleichen oder einem anderen Material wie dem der Arbeitsfläche im wesentlichen auf die Größe und Abmessungen des Loches in der Arbeitsfläche abgestimmt hergestellt wird, der erste Stöpsel in das Loch im Werkstück eingepasst wird, um einen Passsitz zu erzielen, ein Loch in den ersten Stöpsel gebohrt wird, das kleiner ist als das Loch in der Arbeitsfläche, ein zweiter Stöpsel aus dem gleichen oder einem anderen Material wie dem der Arbeitsfläche im wesentlichen auf die gleiche Größe und Abmessungen des Loches im ersten Stöpsel abgestimmt ausgebildet wird, der zweite Stöpsel in das Loch im ersten Stöpsel eingepaßt wird, und der letzte Schritt . in bezug auf einen dritten und weitere Stöpsel wiederholt wird, bis ein letzter Stöpsel ausgebildet wird, der erforderlich ist, um das Auffüllen des zuerst gebildeten Loches in der Arbeitsfläche zu vervollständigen, wobei eine Vielzahl von Stöpseln durch Arbeitsflächenbereiche unterteilt werden, um die Reparatur und/oder das Ausbilden des gewünschten dekorativen Effektes zu vervollständigen.

2. Verfahren nach Anspruch 1, bei dem zentrisch ausgebildete Führungsbohrungen in den Stöpseln während ihrer Ausbildung vorgesehen werden, die beim Bohren der Bohrungen in die Stöpsel verwendet werden, um kleinere Stöpsel darin aufzunehmen.

3. Verfahren zum Dekorieren einer Arbeitsfläche nach Anspruch 1 oder 2, bei dem die ersten, zweiten und weiteren Löcher und Stöpsel-Füller mit kreisförmigen Querschnitten verjüngt ausgebildet werden, so dass eine Reihe von konzentrischen Kreisen auf der Arbeitsfläche erzielt werden.

4. Verfahren zum Dekorieren einer Arbeitsfläche nach einem der vorausgehenden Ansprüche, bei dem die Stöpselfüller unterschiedliche Farbgebung haben.

5. Vorrichtung zum Behandeln einer Arbeitsfläche, z.B. einer Küchen-Arbeitsfläche, die repariert oder dekoriert werden soll, **gekennzeichnet durch** eine Vielzahl von ersten und zweiten aufeinander abgestimmten Werkzeugsätzen, die in entsprechender Weise in der Lage sind, kleinere Löcher zu bohren und Stöpsel dafür in einem Werkstück aufeinander abzustimmen, wodurch ein Loch in der Arbeitsfläche erstellt wird, das **durch** das erste Werkzeugbauteil des größeren Werkzeugs des Werkzeugsatzes gebildet wird, bis der Reparatur- und/oder Dekorationseffekt vervollständigt ist.

6. Vorrichtung nach Anspruch 5, bei dem das zweite Werkzeugbauteil in jedem Werkzeugsatz mit einem Bohrer zur Ausbildung von Führungslöchern in den aufeinander abgestimmten, dadurch ausgebildeten Stöpseln versehen ist, wobei das erste Werkzeugbauteil in jedem Werkzeugsatz Führungsstifte aufweist, die mit den Führungslöchern in den aufeinander abgestimmten Stöpseln in Eingriff kommen, um darin Löcher zu bohren, die mit zunehmend kleiner werdenden, aufeinander abgestimmten Stöpseln ausgefüllt werden, die durch die zweiten Werkzeugbauteile ausgebildet werden.

7. Vorrichtung nach Anspruch 6, bei dem die Führungsstifte auf den ersten Werkzeugteilen und die Bohrer auf den zweiten Werkzeugteilen lösbar sind.

## Revendications

1. Procédé de traitement d'une surface de travail, tel un plan de travail de cuisine, pour la réparer ou la décorer, comprenant le forage d'un trou dans la surface de travail à l'endroit à traiter, obtention d'un premier bouchon fait du même matériau ou d'un matériau différent de celui du plan de travail essentiellement de la taille et des dimensions du trou dans la surface de travail, placement du premier bouchon dans le trou de la surface de travail, forage d'un trou dans le premier bouchon plus petit que le trou dans la surface de travail, obtention d'un second bouchon du même matériau ou d'un matériau différent essentiellement de la taille et des dimensions du trou dans le premier bouchon, adaptation du second bouchon dans le trou du premier bouchon et répétition de la dernière étape avec un troisième bouchon et ainsi de suite jusqu'à ce qu'un dernier bouchon soit obtenu pour compléter le remplissage du premier trou formé dans la surface de travail par une pluralité de bouchons divisés en surfaces superficielles afin de compléter ainsi la réparation et/ou l'effet décoratif recherché.

2. Procédé selon la revendication 1 dans lequel il est prévu des guides de forage formés centralement dans les bouchons durant leur fabrication pour utilisation lors du forage desdits trous dans les bouchons pour y accueillir des bouchons plus petits.

3. Procédé de décoration d'une surface de travail comme revendiqué dans la revendication 1 ou 2 dans lequel le premier , le second trou et les trous et bouchons de remplissage suivants sont coniques avec une section transversale circulaire afin de produire une série de cercles concentriques sur la surface de travail.

4. Procédé de décoration d'une surface de travail comme revendiqué dans n'importe laquelle des revendications précédentes dans lequel les bouchons de remplissage présentent des couleurs différentes.

5. Dispositif pour le traitement d'une surface de travail, tel un plan de travail de cuisine, pour la réparer ou la décorer comprenant une pluralité de jeux de premier et second couteaux adaptés à forer respectivement successivement des trous de plus en plus petits et des bouchons s'y adaptant, dans un matériau, en bouchant ainsi un trou du plan de travail obtenu par un élément de premier couteau du jeu de couteaux le plus grand, jusqu'à ce que la réparation ou l'effet décoratif est finalisé.

6. Appareil selon la revendication 5 dans lequel le second élément de couteau dans chaque jeu de couteaux est fourni avec une mêche pour former des trous de guidage dans les bouchons adaptés qu'ils produisent, le premier élément de couteau de chaque set de couteaux présentant des pointes de guidage pour s'engager dans les trous de guidage des bouchons correspondants afin d'y forer des trous pour remplissage par des bouchons successivement plus petits obtenus par les éléments de second couteau.

7. Appareil comme revendiqué dans la revendication 6 dans lequel les pointes de guidage sur les premières pièces de couteau et les mêches des secondes pièces de couteau sont démontables.
